# EUROPEAN PATENT SPECIFICATION

(11) **EP 3 411 971 B1**
(45) Date of publication and mention of the grant of the patent: **11.10.2023**
(21) Application number: 17700726.7
(22) Date of filing: 11.01.2017
(51) Int. Cl.: H04L 1/00, H04L 1/1812, H04L 1/1822, H04L 1/12

(54) **SEQUENTIAL ACK/NACK ENCODING**
SEQUENZIELLE ACK/NACK-CODIERUNG
CODAGE D'ACCUSÉ DE RÉCEPTION POSITIF ACK/NACK SÉQUENTIEL

(30) Priority: 05.02.2016 GB 201602122
(43) Date of publication of application: 12.12.2018
(73) Proprietor: 3G Wave Ltd., Newbury, Berkshire RG14 6PP (GB)
(72) Inventor: COOPER, David Edward, Newbury, Berkshire RG14 6PP (GB)
(74) Representative: J A Kemp LLP
(86) International application number: PCT/GB2017/050057
(87) International publication number: WO 2017/134414

(56) References cited:
- EP-A2- 1 928 117
- WO-A2-2008/028006

## Description

### Technical Field

This invention relates generally to error detection and correction apparatus, methods and systems. In particular it relates to detection and correction of data loss during the transmission of a stream of packets, e.g. in a wireless communication system.

### Introduction

A crucial function of wireless broadband systems such as UMTS or LTE is the ability to support transmission of streams of packets containing Internet traffic over the air interface. For example, the Transmission Control Protocol ("TCP") provides end-to-end reliable transmission for Internet packets. TCP is intolerant to significant levels of packet loss because it assumes packet loss is normally due to congestion and responds to packet loss by instantly reducing its throughput data rate to relieve congestion and only slowly building it up again. To send TCP/IP efficiently the wireless link requires error correction functionality to ensure TCP/IP receives a sufficiently error free packet stream to prevent the invocation of its congestion avoidance mechanism.

In UMTS and LTE, a key element of this error correction functionality resides in the Radio Link Control ("RLC") protocol. RLC has been designed to provide an error rate to client applications sufficiently low that TCP/IP can use it without performance loss. RLC in these systems employs an automatic repeat request ("ARQ") protocol. The packet loss is not required to be strictly zero, since TCP itself contains an ARQ mechanism and its throughput is little impacted at rates below 10⁻⁵.

ARQ protocols use a straightforward strategy to achieve error correction. The "transmit side" sends a packet, and the "receive side" sends an acknowledgment message containing "ACK", if the receive side receives the packet successfully, or "NACK" if the receive side detects an unsuccessfully received transmission. This acknowledgment message, which contains as little as 1 bit of information (ACK or NACK), is channel coded (for example using a repetition code) and sent to the transmit side as a "feedback signal". The transmit side observes the feedback signal and retransmits RLC packets as needed. Sophisticated ARQ protocols such as LTE RLC assign a sequence number to each packet, which allows them to use techniques such as cumulative acknowledgement messages (which rather than acknowledging a specific packet, inform the transmit side of the successful reception of all packets up to a given packet sequence number) and negative acknowledgement messages (indicating specific packets or groups of packets are missing). These ARQ acknowledgement messages contain multiple bits of information, but can be sent far less frequently than once per packet.

In addition to ARQ protocols, the UMTS and LTE systems also employ a hybrid automatic repeat request ("HARQ") protocol. The use of HARQ is motivated by the observation that even if a packet is received with errors, the physical signal observed at the receive side still contains valuable information about the transmitted data content. To ignore this information is a waste of transmission resources. Instead, the receive side sends a HARQ acknowledgement message for every transmitted HARQ packet. These HARQ acknowledgement messages are separate from the ARQ acknowledgement messages, and typically one HARQ acknowledgement is sent for each transmitted HARQ packet. When a received packet contains an error, the receive side informs the transmit side by sending a HARQ NACK (HARQ negative acknowledgement) and the transmit side sends the packet again. This may happen several times before the packet is received correctly, with the receiver combining information from successive retransmissions. Once the packet is received correctly, it sends an HARQ ACK to the transmit side and passes the compiled packet up to the RLC layer. The HARQ acknowledgement messages are entirely separate from the acknowledgement messages of the ARQ protocol.

Hybrid ARQ does not entirely replace ARQ in state of the art wireless systems. The reason is that Hybrid ARQ requires every individual transmission to be acknowledged. The power needed to send such acknowledgement messages sufficiently reliably would introduce excessive interference on the reverse link. In other words, feedback signals are themselves error prone. If a packet is received correctly, but the feedback signal is misinterpreted as NACK, there is no great problem: the transmit side will simply unnecessarily retransmit. A much greater problem arises when a packet is received incorrectly, but although the receive side responded with a NACK, the received feedback signal is misinterpreted as an ACK: in that case the transmit side would continue with the next packet, never retransmitting the lost packet. TCP would experience packet loss, and if the rate of this event occurring is above 10⁻⁵ then TCP throughput degrades. The cost of reliably channel encoding HARQ acknowledgement messages to produce feedback signals to achieve this error rate is excessive since each packet elicits a corresponding feedback signal.

It is for this reason that UMTS and LTE systems use two error correcting protocols, the HARQ protocol and an ARQ protocol at the RLC layer. The RLC protocol uses strong error protection for feedback signals from its acknowledgement messages but sends these relatively infrequently. These are used to detect when the HARQ protocol missed a packet due e.g. to misinterpreting NACK as ACK. The ARQ receiver has to detect that the packet has not been received. This is done by detecting a missing ARQ sequence number in the outer ARQ protocol (sometimes called "gap detection"), which can only occur after the maximum HARQ delay, and then sending a ARQ "NACK" status report, which is itself subject to HARQ delay, followed by HARQ retransmission of the affected packet. Thus three time delays are involved. Having two error correction protocols is disadvantageous in several ways. The RLC ARQ protocol is slower to detect errors, due to these time delays. The ARQ protocol requires additional protocol overhead. The presence of two protocols leads to greater complexity.

### Summary

According to a first aspect of the invention there is provided a method in a receive side unit as defined by claim 1 of the appended claims. According to a second aspect of the invention there is provided a method in a transmit side unit as defined by claim 4 of the appended claims. According to a third aspect, a system is provided as defined in claim 5. According to a fourth aspect, a receiving apparatus is provided as defined in claim 7. According to a fifth aspect, a receiving apparatus is provided as defined in claim 9.

It is an aim of the present invention to overcome at least one problem of the prior art. In an embodiment, the invention can reduce the rate of occurrence of NACK-to-ACK errors to a low enough level that their occasional but rare occurrences can be tolerated. When a HARQ transmission failure is detected by the HARQ protocol, this is known very quickly by the transmit side, and the only time penalty is for a new HARQ transmission.

In an embodiment of the invention, the ARQ protocol can be simplified or even dispensed with.

The present invention discloses a novel error protection mechanism for HARQ feedback where successive acknowledgement messages are jointly coded to improve reliability. Successive acknowledgement messages are channel encoded into feedback signals using a convolutional code with rate *k*/*m* (see e.g. Lin & Costello Error Control Coding Prentice Hall 1983). With convolutional codes one input block of k information bits arrives per epoch and is coded into an output block of *m*>*k* coded bits. The coded signal at the current epoch depends on the input at the current epoch and the λ-1 previous input blocks (λ is called the code constraint length). The decoder introduces a delay when decoding HARQ acknowledgements messages but this delay is more than compensated for by the improved performance and the elimination of the large delays due to NACK to ACK errors.

3GPP LTE specification TS 36.212 discloses the joint coding of HARQ acknowledgements with other information concurrently sent by the receive side such as channel quality. This can be advantageous when other information needs to be sent concurrently with the HARQ feedback signal.

EP1928117 teaches that an HARQ acknowledgement for a previous process can be repeated by sending it along with the HARQ acknowledgement for the current process as separate information elements. However there is no teaching regarding joint channel coding of such acknowledgements: the channel coding of ACK/NACK values for different HARQ acknowledgements is independent. WO2008028006A2 teaches joint coding of ACK/NACK values over several transmissions, by repeating previous ACK/NACK values in later ACK/NACK messages.

The present invention is described below with reference to exemplary embodiments and the accompanying drawings, in which:
- Figure 1 is diagram illustrating steps in a conventional HARQ process;
- Figure 2 is a diagram of apparatus according to an embodiment of the invention
- Figure 3 is a diagram illustrating steps in a method according to an embodiment of the invention

### Multi-process HARQ protocols

In prior art wireless systems such as LTE the link is synchronous in both directions, i.e. HARQ packets are transmitted at known time intervals or air-interface "frames". The corresponding acknowledgement messages for each HARQ packet are returned in a known following frame. In such synchronous systems each epoch corresponds to an air-interface frame. There can be a significant delay between the transmission epoch of an HARQ packet, the acknowledgement epoch and the next transmission or retransmission. The delay arises because the transmitted HARQ packet take time to reach the destination; it is received over a finite time period; the destination receiver must have time to decode the packet and transmit a response; the response takes a finite time to reach the originator and is received over a finite duration; and the source unit must decode and process the response.

A simple approach would be for the transmit side to wait until it receives acknowledgement before transmitting a new packet, a "stop-and-wait" protocol. A disadvantage of stop-and-wait protocols is the transmission medium remains idle and underused because the transmit side cannot send a new packet until an acknowledgement is returned. This uses the transmission medium inefficiently and is called "protocol stalling".

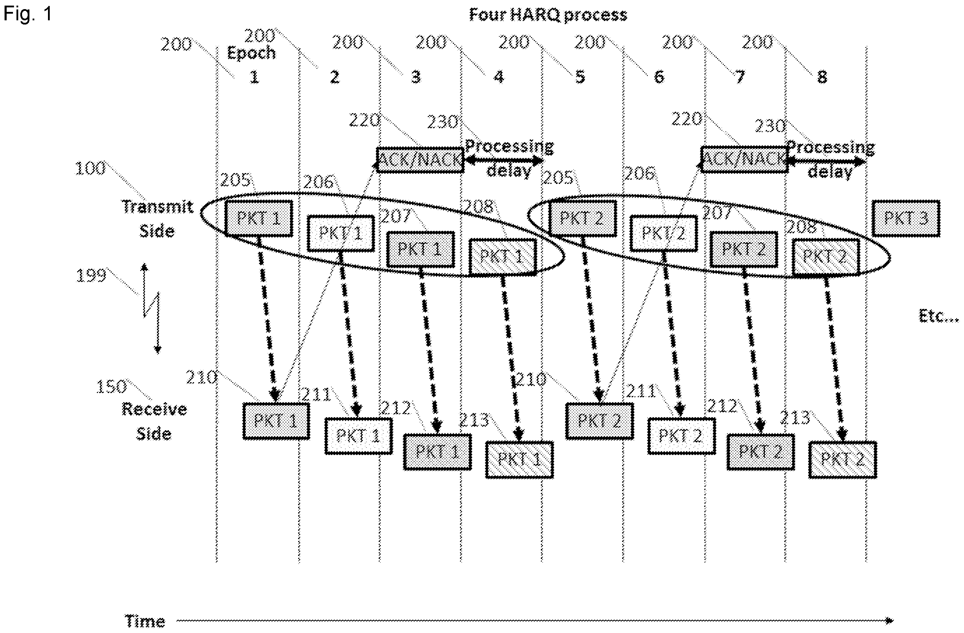

To avoid stalling prior art wireless systems such as LTE and UMTS use so called multi-process HARQ, the concept of which is illustrated in Figure 1. The stream of HARQ packets is separated by into a number of sub-streams (called "HARQ processes"), which are transmitted in sequential cyclic order in successive epochs. Having transmitted a packet belonging to (say) process 1, the packets for processes 2,3... are transmitted (in fact LTE uses 8 such processes, but here only 4 are illustrated). By the time that these processes are transmitted, sufficient time has elapsed for the packet on process 1 to be acknowledged and a new transmission or retransmission to be ready. Note that only acknowledgement messages for process 1 are illustrated.

Transmitted packets (205, 206, 207, 208) are sent by the transmit side unit (100) during successive time frames or packet transmission epochs (200) and a corresponding received packet (210,211, 212, 213) is observed by the receive side unit (150) in the same epoch. Epochs at the transmit side and receive side correspond although there may be a delay between the time at which the signal is sent and the time at which it is received due to propagation time of the signal through the transmission medium (199). Packets from successive processes are transmitted in cyclic order, thus packets 205, 206, 207, 208 belong to processes 1, 2, 3, 4 respectively.

In practice the receive side needs a certain time to process the received packet (210) to determine whether it has received it correctly, and be ready to transmit a feedback signal. In the figure 1, the acknowledgement message (220) is sent in response during epoch 3. Thus for a given packet transmission epoch, there is a known acknowledgement epoch in which the feedback signal is sent, which is subsequent to the packet transmission epoch. Equally the transmit side needs a positive amount of time to receive and process the feedback signal (220). This time needed to process a received signal is called processing delay (230), which is a positive allowance of time which can be used to perform processing actions. The amount of time actually needed to process a received signal may vary between implementations but is limited to a maximum amount by the HARQ protocol. Thus, although the feedback signal is received in epoch 3, the next transmission of a packet for HARQ process 1 is not until epoch 5. Only acknowledgement messages for packets associated with HARQ process 1 (220) is shown, but similar timings apply for the other HARQ processes. Each complete cycle of four HARQ processes is outlined by an oval shape for emphasis.

In UMTS and LTE there are eight HARQ processes operating concurrently in a time interleaved fashion, each on a stop-and-wait basis. Since successive packets may require different number of HARQ re-transmissions, it may arise that packets are decoded by the HARQ process in a slightly different order to their original transmission. For this reason, HARQ packets contain a sequence number which allows them to be re-assembled in the correct order at the receive side.

### Overview

In an embodiment of the present invention successive HARQ acknowledgement messages are jointly coded and transmitted in successive epochs using a convolutional code. In UMTS and LTE HARQ, acknowledgement messages comprise one bit per transmitted packet (ACK or NACK). An example of suitable codes are non-terminated non-recursive rate *1*/*m* linear convolutional codes (NRC), where for each input epoch, one bit is input (*k*=*1)* and *m* coded symbols are output. These output bits may undergo further processes prior to transmission, for example the number of actually transmitted coded bits can be reduced by puncturing techniques.

In prior art systems there is a known timing correspondence between a HARQ packet transmitted in a certain epoch and the feedback signal in a corresponding later epoch. In the invention there is a known timing correspondence between the epoch in which the HARQ packet is received and its acknowledgment epoch, i.e. the *first* epoch in which the coded feedback signal is influenced by the contents of the acknowledgement message. However information about the contents of the acknowledgment message is coded over *λ* successive feedback signals, together with information about other acknowledgement messages.

The channel coded feedback signal can be jointly decoded with feedback signals from previous and subsequent epochs which (absent noise and channel impairments) unambiguously indicate the contents of the acknowledgement message. To reliably decode the input block at epoch *T* with a convolutional code of constraint length *λ,* the decoder should delay at least *λ-1* epochs after epoch *T* (i.e. wait for the coded symbols corresponding to *λ-1* subsequent coded blocks) and perform joint decoding of the input block along with previous and subsequent input blocks. In practice a longer delay than this is required for optimum performance. This time delay has memory implications when applied to acknowledgement messages. First, potential message buffering requirements are increased both in transmit side and receive side. In the transmit side, the HARQ packet cannot be released before an ACK is received. In the receive side, soft information for HARQ packets that have been negatively acknowledged must be stored until the packet is correctly decoded. However the system advantages compensate for increased memory buffer requirements.

Performance is dependent on the characteristics of the transmission medium. In Rayleigh fading channels affected by Gaussian noise, measurements indicate that a constraint length 3 rate ⅓ code with decode delay of 8 provides sufficient performance to provide a NACK to ACK error rate of under 10⁻⁵, at the same operating point where prior art systems provide an error rate of 10⁻³.

### First Embodiment

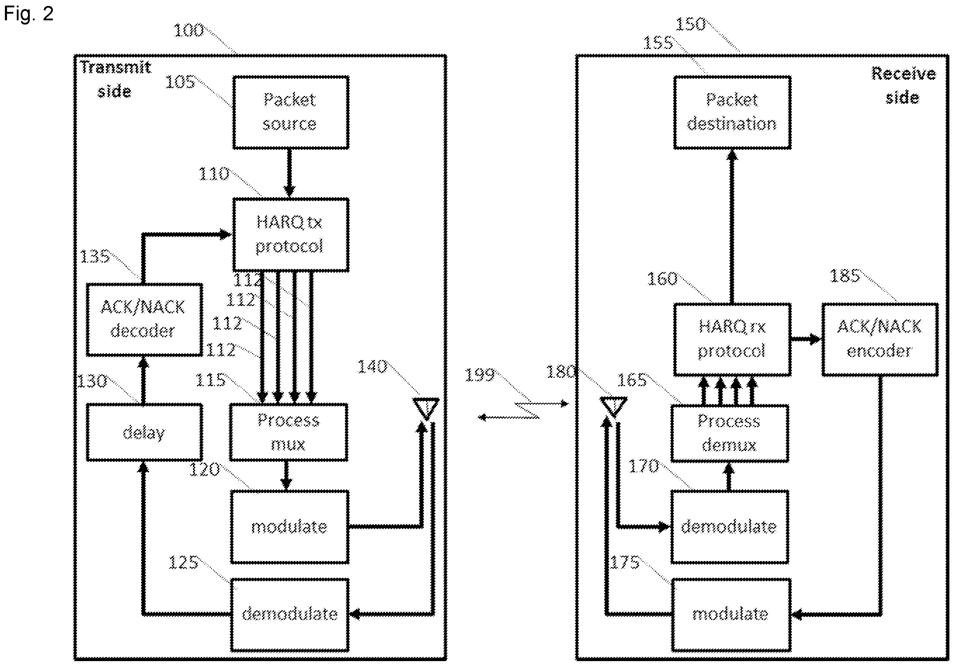

Figure 2 presents a block diagram of an arrangement in accordance with an aspect of the invention. The arrangement includes a transmit side unit (100) and a receive side unit (150). The transmit side unit contains a packet source (105) which produces data packets (which may for example be provided from some external source). The HARQ transmit protocol (110) assigns each given packet to be transmitted as data by one of the HARQ processes (112), as already described with reference to prior art. The HARQ processes are time serialized by the process multiplexer (115), modulated (120) and transmitted over the radio antenna (140), in the case that the transmission medium (199) is a radio channel. The radio transmission is received at the receive side unit antenna 180, demodulated (170) and multiplexed into received HARQ processes (165) as already described with reference to prior art where it is submitted to the HARQ receiver protocol (160). If reception is successful it is forwarded to the packet destination (155) which may forward the packet to a destination external to the unit. In any event a HARQ acknowledgement message indicating ACK/NACK is encoded by an ACK/NACK encoder (185) modulated (175) and transmitted via the transmission medium (199) to the transmit side. It is demodulated (125) and stored in a delay unit (130). After the required delay the ACK/NACK decoder (135) decodes the feedback signals and submits the result to the HARQ transmit protocol (110) which retransmits the packet or transmits a new packet.

The present invention introduces three novel elements compared with prior art: a ACK/NACK encoder (185) which convolutionaly encodes sequential acknowledgement messages; a decoding delay via the delay unit (130); and a ACK/NACK decoder unit (135) which decodes the sequentially coded acknowledgement message after an appropriate delay. The decision of whether a given HARQ packet was received correctly can be taken after receiving the feedback signals of the packet of interest and from *d* subsequent packets, where *d* is the decoding delay.

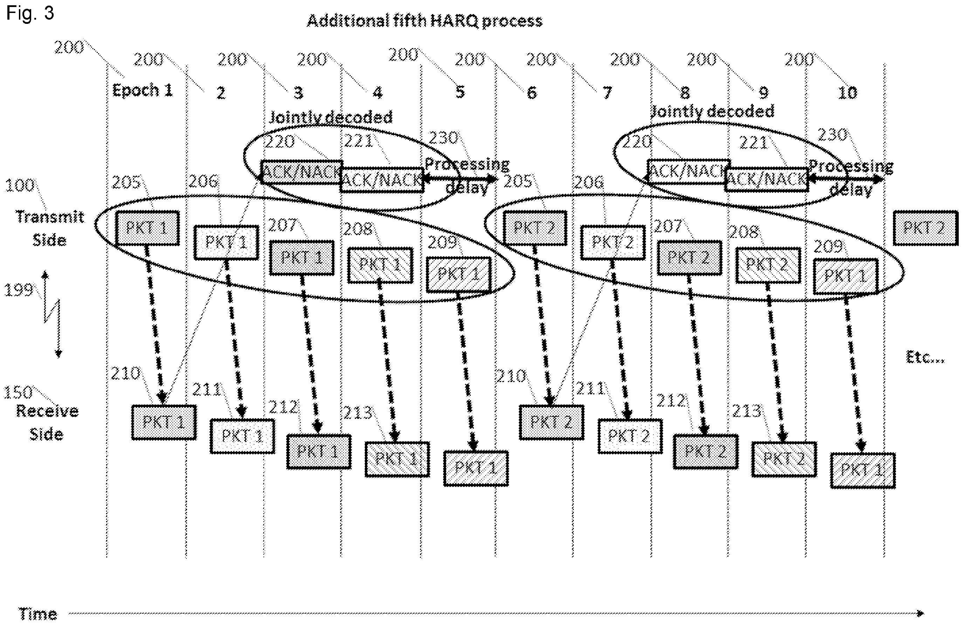

To permit this delay, one or more additional HARQ processes are introduced. Figure 3 illustrates the introduction of an additional fifth process, as compared with the prior art system illustrated in Figure 1. The additional process sends HARQ packets (209) in epochs 5 and 10. Process 1 transmits a packet for the 2^{nd} time in epoch 6. The feedback signals (220,221) (illustrated by oval shape) corresponding to packets in transmit epoch 1 and 2 are returned in epoch 3 and 4. This arrangement provides a positive amount of time for processing delay between the end of epoch 4 in which the latter feedback signal (221) is received, and the start of epoch 6 in which the next packet (205) is transmitted on the first HARQ process. The transmit side may employ this processing delay to jointly decode both feedback signals (220,221) in order to determine between whether the acknowledgement message for the packet in epoch 1 contained ACK or NACK, and make the decision whether to perform a new transmission or a retransmission. This joint sequential decoding by the ACK/NACK decoder (135) provides coding gain.

By contrast with prior art systems, a decoding delay *d*>*0* is used, and the transmit side can observe not just the feedback signal corresponding to the epoch of the packet of interest but also the feedback signals corresponding to *d* succeeding epochs, where the situation for *d*=*1* has been illustrated.

With the present invention, system delay can be reduced compared to systems with separate HARQ and ARQ protocols. Although the number of HARQ processes is increased, delay caused by retransmissions when a HARQ packet transmission fails is reduced since all retransmissions are handled within the HARQ protocol and a NACK-to-ACK error becomes a sufficiently rare event that packet loss in this situation can be tolerated

The invention is not limited to systems with synchronous timing. Provided the receive side can identify packets, and the transmit side can identify feedback signals and determine correspondence with an HARQ packet, the invention can be applied to non-synchronous systems in a straightforward manner that would be apparent to the skilled person. The prior art illustrations above refer to radio systems but nothing prevents the application of this invention to other transmission media, provided HARQ can be implemented over that media.

The invention is not limited to use with multiple stop-and-wait processes. Provided the packet sequence number can be determined, for example by a separate control channel, and the number and order of feedback signals is preserved by the transmission medium, the invention can be adapted for use in conjunction with conventional windowed protocol techniques, by including a packet sequence number in the acknowledgement message (which consequently contains multiple bits of information). The transmit side jointly decodes the feedback signals and determines the sequence number of the acknowledged packets.

The invention may take the form of a computer program containing one or more sequences of machine-readable instructions for instructing a computer to perform a method as disclosed above, or a data storage medium (e.g. semiconductor memory, magnetic or optical disk) having such a computer program stored therein. The descriptions above are intended to be illustrative, not limiting. Thus it will be apparent to one skilled in the art that modifications may be made to the invention as described without departing from the scope of the claims set out below.

## Claims

1. A method in a receive side unit (150) for receiving a packet stream using HARQ in which:
a first **packet** is received in a first **transmission epoch** (200); and
a second **packet** is received in a second **transmission epoch** different from the first transmission epoch; and
a first **acknowledgment message** containing information about the first **packet** is encoded; and
a second **acknowledgment message** containing information about the second **packet** is encoded; and
a **feedback signal** (220) is sent in a first **acknowledgment epoch** corresponding to the first **transmission epoch** where the feedback signal contains at least one **channel coded** bit whose value depends on the first **acknowledgment message**
**characterized in that**
a second **feedback signal** (221) is sent in a second **acknowledgment epoch** that is different from the first acknowledgement epoch, the second acknowledgement epoch corresponding to the second **transmission epoch** where the second feedback signal contains at least one **channel coded bit** whose value depends jointly on at least the first **acknowledgment message** and the second **acknowledgment message** by use of a convolutional code.

2. A method according to claim 1 wherein successive **acknowledgment messages** are jointly channel coded as **feedback signals** using the convolutional code.

3. A method according to claim 1 or 2 wherein:
a plurality *N* of HARQ processes are employed;
the **packet** is in one of the HARQ process; and
there is a processing delay between the epoch of the last **feedback signal** which is jointly channel coded with the **acknowledgment message** and the next epoch in which a **packet** of the HARQ process is transmitted.

4. A method in a transmit side unit (100) for sending a packet stream and receiving **feedback signals** in which:
a first **packet** (210) is sent in a first transmission **epoch** (200); and
a second **packet** is sent in a second transmission **epoch** different from the first transmission epoch; and
a **first feedback signal** (220) is received in a first **acknowledgement epoch** (200) corresponding to the first transmission epoch; and
a **second feedback signal** is received in a second **acknowledgement epoch** (200 different from the first acknowledgement epoch, the second acknowledgement epoch corresponding to the second transmission epoch; and
a first **acknowledgment message** containing information about the first **packet** is decoded; and
a second **acknowledgment message** containing information about the second **packet** is decoded; and
the first **feedback signal** contains at least one **channel coded** bit whose value depends on the first acknowledgment message;
**characterized in that** the second **feedback signal** contains at least one **channel coded** bit whose value depends jointly on the first **acknowledgment message** and the second **acknowledgment** by use of a convolutional code and
the first **packet** is retransmitted after receiving the **first feedback signal** and the **second feedback signal** if the first packet is **negatively acknowledged.**

5. A system for sending a packet stream and receiving **feedback signals,** the system comprising:
a transmit side unit (100) configured to send a first **packet** (205) to a receive side unit in a first transmission **epoch** (200), and configured to send a second **packet** (205) to a receive side unit in a second transmission **epoch** different from the first transmission epoch,
a receive side unit (150) configured to encode a **first acknowledgment message** which containing information about the first **packet;** and
the receive side unit (150) configured to encode a second **acknowledgment message** which containing information about the second **packet;** and
the receive side unit configured to send a first feedback signal (220) to the transmit side unit in a first acknowledgement epoch corresponding to the first transmission epoch, where the first feedback signal contains at least one channel coded bit whose value depends on the first acknowledgment message
**characterized in that**
the receive side unit is configured to send a second feedback signal (221) to the transmit side unit in a second acknowledgement epoch different from the first acknowledgement epoch, the second acknowledgement epoch corresponding to the second transmission epoch where the second feedback signal contains at least one channel coded bit whose value depends jointly on at least the first acknowledgment message and the second acknowledgment message by use of a convolutional code,
and
the transmit side unit is configured to re-transmit the first **packet** after receiving the **first feedback signal** and the **second feedback signal** if the first packet is **negatively acknowledged.**

6. A system according to claim 5 wherein the transmit side unit and receive side unit use a plurality of HARQ processes and
the transmit side unit is further configured to transmit the **packet** as part of one of the plurality of HARQ processes and to provide a delay between the epoch containing the **further feedback signal** and the next epoch in which another **packet** of the HARQ process is transmitted.

7. A receive side apparatus (150) for receiving a **packet stream** (210,211,212,213) and sending **feedback signals,**
configured to receive a first **packet** from a transmit side apparatus sent in a first **transmission epoch** (200);
and configured to receive a second **packet** from a transmit side apparatus sent in a second **transmission epoch** (200) different from the first transmission epoch;
and configured to send a first **feedback signal** (220) in a first **acknowledgment epoch** corresponding to the first **transmission epoch**
and configured to send a second **feedback signal** (220) in a second **acknowledgment epoch** different from the first acknowledgement epoch, the, second acknowledgement epoch corresponding to the second **transmission epoch**
and comprising an **ACK/NACK encoder** configured to encode a first **acknowledgment message** containing information about the first **packet,**
the **ACK/NACK encoder** being further configured to encode a second **acknowledgment message** containing information about the second **packet**
where the first **feedback signal** contains at least one **channel coded** bit whose value depends on the first **acknowledgment message**
**characterized in that** the second feedback signal contains at least one **channel coded bit** whose value depends jointly on at least the first **acknowledgment message** and the second **acknowledgment message** by use of a convolutional code.

8. A receive side apparatus according to claim 7 wherein the first **feedback signal** and the second **feedback signal** are sent before the transmission **epoch** in which the packet is retransmitted if negatively acknowledged.

9. A **transmit side** apparatus (100) for transmitting a **packet stream** and receiving **feedback signals** (220,221)
and configured to send a first **packet** during a first **transmission epoch**
and configured to send a second packet during a second **transmission epoch** different from the first transmission epoch;
and configured to receive a first **feedback signal** sent in a first **acknowledgement epoch** which corresponds to the first **transmission epoch;**
and configured to receive a second **feedback signal** sent in a second **acknowledgement epoch** different from the first acknowledgement epoch, the second acknowledgement epoch corresponds to the second **transmission epoch;**
and comprising an **ACK/NACK decoder** which determines a first **acknowledgment message** which contains information about the first **packet** and determines a second **acknowledgment message** which contains information about the second **packet**
wherein the first **feedback signal** contains at least one **channel coded bit** whose value depends on the first **acknowledgment message**
**characterized in that**
the second **feedback signal** contains at least one **channel coded bit** whose value depends j ointly on at least the first **acknowledgment message** and the second **acknowledgment message** by use of a convolutional code
and the **ACK/NACK decoder** determines the first **acknowledgment message** by jointly decoding the first **feedback signal** and second **feedback signal**
and the **transmit side** apparatus makes the decision whether to perform a new transmission or perform a retransmission following said joint decoding.

## Patentansprüche

1. Verfahren in einer empfangsseitigen Einheit (150) zum Empfangen eines Paketstroms unter Verwendung von HARQ, bei dem:
ein erstes Paket in einer ersten Sendeepoche (200) empfangen wird; und
ein zweites Paket in einer zweiten Sendeepoche, die sich von der ersten Sendeepoche unterscheidet, empfangen wird; und
eine erste Bestätigungsnachricht, die Informationen über das erste Paket enthält, codiert wird; und
eine zweite Bestätigungsnachricht, die Informationen über das zweite Paket enthält, codiert wird; und
ein Rückmeldesignal (220) in einer ersten Bestätigungsepoche gesendet wird, die der ersten Sendeepoche entspricht, wobei das Rückmeldesignal mindestens ein kanalcodiertes Bit enthält, dessen Wert von der ersten Bestätigungsnachricht abhängt,
**dadurch gekennzeichnet, dass**
ein zweites Rückmeldesignal (221) in einer zweiten Bestätigungsepoche gesendet wird, die sich von der ersten Bestätigungsepoche unterscheidet, wobei die zweite Bestätigungsepoche der zweiten Sendeepoche entspricht, wobei das zweite Rückkopplungssignal mindestens ein kanalcodiertes Bit enthält, dessen Wert gemeinsam von mindestens der ersten Bestätigungsnachricht und der zweiten Bestätigungsnachricht unter Verwendung eines Faltungscodes abhängt.

2. Verfahren nach Anspruch 1, wobei aufeinanderfolgende Bestätigungsnachrichten gemeinsam als Rückkopplungssignale unter Verwendung des Faltungscodes kanalcodiert werden.

3. Verfahren nach Anspruch 1 oder 2, wobei:
eine Vielzahl N von HARQ-Prozesse verwendet wird;
das Paket sich in einem der HARQ-Prozesse befindet; und
zwischen der Epoche des letzten Rückkopplungssignals, das gemeinsam mit der Bestätigungsnachricht kanalcodiert ist, und der nächsten Epoche, in der ein Paket des HARQ-Prozesses übertragen wird, eine Verarbeitungszeit liegt.

4. Verfahren in einer sendeseitigen Einheit (100) zum Senden eines Paketstroms und Empfangen von Rückmeldesignalen, bei dem:
ein erstes Paket (210) in einer ersten Sendeepoche (200) gesendet wird; und
ein zweites Paket in einer zweiten Sendeepoche, die sich von der ersten Sendeepoche unterscheidet, gesendet wird; und
ein erstes Rückmeldesignal (220) in einer ersten Bestätigungsepoche (200), die der ersten Sendeepoche entspricht, empfangen wird; und
ein zweites Rückmeldesignal in einer zweiten Bestätigungsepoche (200), die sich von der ersten Bestätigungsepoche unterscheidet, empfangen wird, wobei die zweite Bestätigungsepoche der zweiten Sendeepoche entspricht, und
eine erste Bestätigungsnachricht, die Informationen über das erste Paket enthält, decodiert wird; und
eine zweite Bestätigungsnachricht, die Informationen über das zweite Paket enthält, decodiert wird; und
das erste Rückmeldesignal mindestens ein kanalcodiertes Bit enthält, dessen Wert von der ersten Bestätigungsnachricht abhängt;
**dadurch gekennzeichnet, dass** das zweite Rückkopplungssignal mindestens ein kanalcodiertes Bit enthält, dessen Wert gemeinsam von der ersten Bestätigungsnachricht und der zweiten Bestätigung unter Verwendung eines Faltungscodes abhängt und
das erste Paket nach dem Empfang des ersten Rückmeldesignals und des zweiten Rückmeldesignals erneut gesendet wird, wenn das erste Paket negativ bestätigt wird.

5. System zum Senden eines Paketstroms und Empfangen von Rückmeldesignalen, wobei das System umfasst:
eine sendeseitige Einheit (100), die dafür konfiguriert ist, ein erstes Paket (205) an eine empfangsseitige Einheit in einer ersten Sendeepoche (200) zu senden, und dafür konfiguriert ist, ein zweites Paket (205) an eine empfangsseitige Einheit in einer zweiten Sendeepoche zu senden, die sich von der ersten Sendeepoche unterscheidet,
eine empfangsseitige Einheit (150), die dafür konfiguriert ist, eine erste Bestätigungsnachricht zu codieren, die Informationen über das erste Paket enthält; und
wobei die empfangsseitige Einheit (150) dafür konfiguriert ist, eine zweite Bestätigungsnachricht zu codieren, die Informationen über das zweite Paket enthält; und
die empfangsseitige Einheit dafür konfiguriert ist, ein erstes Rückmeldesignal (220) an die sendeseitige Einheit in einer ersten Bestätigungsepoche zu senden, die der ersten Sendeepoche entspricht, wobei das erste Rückmeldesignal mindestens ein kanalcodiertes Bit enthält, dessen Wert von der ersten Bestätigungsnachricht abhängt;
**dadurch gekennzeichnet, dass**
die empfangsseitige Einheit dafür konfiguriert ist, ein zweites Rückmeldesignal (221) an die sendeseitige Einheit in einer zweiten Bestätigungsepoche zu senden, die sich von der ersten Bestätigungsepoche unterscheidet, wobei die zweite Bestätigungsepoche der zweiten Sendeepoche entspricht, wobei das zweite Rückkopplungssignal mindestens ein kanalcodiertes Bit enthält, dessen Wert gemeinsam mindestens von der ersten Bestätigungsnachricht und der zweiten Bestätigungsnachricht unter Verwendung eines Faltungscodes abhängt, und
die sendeseitige Einheit dafür konfiguriert ist, das erste Paket nach dem Empfang des ersten Rückmeldesignals und des zweiten Rückmeldesignals erneut zu senden, wenn das erste Paket negativ bestätigt wird.

6. System nach Anspruch 5, wobei die sendeseitige Einheit und die empfangsseitige Einheit eine Vielzahl von HARQ-Prozessen verwenden und
die sendeseitige Einheit ferner dafür konfiguriert ist, das Paket als Teil eines der Vielzahl von HARQ-Prozessen zu übertragen und eine Verzögerung zwischen der Epoche, die das weitere Rückmeldesignal enthält, und der nächsten Epoche, in der ein anderes Paket des HARQ-Prozesses übertragen wird, bereitzustellen.

7. Empfangsseitige Vorrichtung (150) zum Empfangen eines Paketstroms (210, 211, 212, 213) und zum Senden von Rückmeldesignalen,
die dafür konfiguriert ist, ein erstes Paket von einer Vorrichtung auf der Sendeseite zu empfangen, das in einer ersten Sendeepoche (200) gesendet wird;
und dafür konfiguriert ist, ein zweites Paket von einer sendeseitigen Vorrichtung zu empfangen, das in einer zweiten Sendeepoche (200) gesendet wird, die sich von der ersten Sendeepoche unterscheidet;
und dafür konfiguriert ist, ein erstes Rückmeldesignal (220) in einer ersten Bestätigungsepoche zu senden, die der ersten Sendeepoche entspricht,
und dafür konfiguriert ist, ein zweites Rückmeldungssignal (220) in einer zweiten Bestätigungsepoche zu senden, die sich von der ersten Bestätigungsepoche unterscheidet, wobei die zweite Bestätigungsepoche der zweiten Sendeepoche entspricht,
und einen ACK/NACK-Codierer umfasst, der dafür konfiguriert ist, eine erste Bestätigungsnachricht zu codieren, die Informationen über das erste Paket enthält,
wobei der ACK/NACK-Codierer ferner dafür konfiguriert ist, eine zweite Bestätigungsnachricht zu codieren, die Informationen über das zweite Paket enthält,
wobei das erste Rückmeldesignal mindestens ein kanalcodiertes Bit enthält, dessen Wert von der ersten Bestätigungsnachricht abhängt,
**dadurch gekennzeichnet, dass** das zweite Rückkopplungssignal mindestens ein kanalcodiertes Bit enthält, dessen Wert gemeinsam mindestens von der ersten Bestätigungsnachricht und der zweiten Bestätigungsnachricht unter Verwendung eines Faltungscodes abhängt.

8. Empfangsseitige Vorrichtung nach Anspruch 7, wobei das erste Rückmeldesignal und das zweite Rückmeldesignal vor der Sendeepoche gesendet werden, in der das Paket bei negativer Bestätigung erneut gesendet wird.

9. Sendeseitige Vorrichtung (100) zum Übertragen eines Paketstroms und Empfangen von Rückmeldesignalen (220, 221)
und die dafür konfiguriert ist, ein erstes Paket während einer ersten Sendeepoche zu senden,
und die dafür konfiguriert ist, ein zweites Paket während einer zweiten Sendeepoche, die sich von der ersten Sendeepoche unterscheidet, zu senden;
und die dafür konfiguriert ist, ein erstes Rückmeldesignal zu empfangen, das in einer ersten Bestätigungsepoche gesendet wird, die der ersten Sendeepoche entspricht,
und die dafür konfiguriert ist, ein zweites Rückmeldungssignal zu empfangen, das in einer zweiten Bestätigungsepoche gesendet wird, die sich von der ersten Bestätigungsepoche unterscheidet, wobei die zweite Bestätigungsepoche der zweiten Sendeepoche entspricht,
und die einen ACK/NACK-Decodierer umfasst, der eine erste Bestätigungsnachricht bestimmt, die Informationen über das erste Paket enthält, und eine zweite Bestätigungsnachricht bestimmt, die Informationen über das zweite Paket enthält,
wobei das erste Rückmeldesignal mindestens ein kanalcodiertes Bit enthält, dessen Wert von der ersten Bestätigungsnachricht abhängt,
**dadurch gekennzeichnet, dass**
das zweite Rückkopplungssignal mindestens ein kanalcodiertes Bit enthält, dessen Wert gemeinsam mindestens von der ersten Bestätigungsnachricht und der zweiten Bestätigungsnachricht unter Verwendung eines Faltungscodes abhängt,
und der ACK/NACK-Dekoder die erste Bestätigungsnachricht durch gemeinsames Decodieren des ersten Rückmeldesignals und des zweiten Rückmeldesignals bestimmt,
und die Vorrichtung auf der Sendeseite die Entscheidung trifft, ob nach der gemeinsamen Decodierung eine neue Übertragung oder eine wiederholte Übertragung durchgeführt werden soll.

## Revendications

1. Procédé dans une unité côté réception (150) pour recevoir un flux de paquets en utilisant HARQ dans lequel :
un premier paquet est reçu à une première époque de transmission (200) ; et
un deuxième paquet est reçu à une deuxième époque de transmission différente de la première époque de transmission ; et
un premier message d'accusé de réception contenant des informations sur le premier paquet est codé ; et
un deuxième message d'accusé de réception contenant des informations sur le deuxième paquet est codé ; et
un signal de rétroaction (220) est envoyé à une première époque d'accusé de réception correspondant à la première époque de transmission, le signal de rétroaction contenant au moins un bit codé en canal dont la valeur dépend du premier message d'accusé de réception
**caractérisé en ce qu'**un deuxième signal de rétroaction (221) est envoyé à une deuxième époque d'accusé de réception qui est différente de la première époque d'accusé de réception, la deuxième époque d'accusé de réception correspondant à la deuxième époque de transmission où le deuxième signal de rétroaction contient au moins un bit codé en canal dont la valeur dépend conjointement d'au moins le premier message d'accusé de réception et le deuxième message d'accusé de réception en utilisant un code convolutif.

2. Procédé selon la revendication 1, dans lequel les messages d'accusé de réception successifs sont codés conjointement en tant que signaux de rétroaction en utilisant le code convolutif.

3. Procédé selon la revendication 1 ou 2, dans lequel :
une pluralité *N* de processus HARQ sont utilisés ;
le paquet est dans l'un des processus HARQ ; et
il existe un délai de traitement entre l'époque du dernier signal de rétroaction qui est codé conjointement en canal avec le message d'accusé de réception et l'époque suivante à laquelle un paquet du processus HARQ est transmis.

4. Procédé dans une unité côté transmission (100) pour envoyer un flux de paquets et recevoir des signaux de rétroaction dans lequel :
un premier paquet (210) est envoyé à une première époque de transmission (200) ; et
un deuxième paquet est envoyé à une deuxième époque de transmission différente de la première époque de transmission ; et
un premier signal de rétroaction (220) est reçu à une première époque d'accusé de réception (200) correspondant à la première époque de transmission ; et
un deuxième signal de rétroaction est reçu à une deuxième époque d'accusé de réception (200) différente de la première époque d'accusé de réception, la deuxième époque d'accusé de réception correspondant à la deuxième époque de transmission ; et
un premier message d'accusé de réception contenant des informations sur le premier paquet est décodé ; et
un deuxième message d'accusé de réception contenant des informations sur le deuxième paquet est décodé ; et
le premier signal de rétroaction contient au moins un bit codé en canal dont la valeur dépend du premier message d'accusé de réception ;
**caractérisé en ce que** le deuxième signal de rétroaction contient au moins un bit codé en canal dont la valeur dépend conjointement du premier message d'accusé de réception et du deuxième accusé de réception au moyen d'un code convolutif et le premier paquet est retransmis après avoir reçu le premier signal de rétroaction et le deuxième signal de rétroaction si le premier paquet est accusé de réception négativement.

5. Système pour envoyer un flux de paquets et recevoir des signaux de rétroaction, le système comprenant :
une unité côté transmission (100) configurée pour envoyer un premier paquet (205) à une unité côté réception dans une première époque de transmission (200), et configurée pour envoyer un deuxième paquet (205) à une unité côté réception dans une deuxième époque de transmission différente de la première époque de transmission,
une unité côté réception (150) configurée pour coder un premier message d'accusé de réception qui contient des informations sur le premier paquet ; et
l'unité côté réception (150) est configurée pour coder un deuxième message d'accusé de réception qui contient des informations sur le deuxième paquet ; et
l'unité côté réception est configurée pour envoyer un premier signal de rétroaction (220) à l'unité côté transmission à une première époque d'accusé de réception correspondant à la première époque de transmission, le premier signal de rétroaction contenant au moins un bit codé en canal dont la valeur dépend du premier message d'accusé de réception **caractérisé en ce que**
l'unité côté réception est configurée pour envoyer un deuxième signal de rétroaction (221) à l'unité côté transmission à une deuxième époque d'accusé de réception différente de la première époque d'accusé de réception, la deuxième époque d'accusé de réception correspondant à la deuxième époque de transmission où le deuxième signal de rétroaction contient au moins un bit codé en canal dont la valeur dépend conjointement d'au moins le premier message d'accusé de réception et le deuxième message d'accusé de réception en utilisant un code convolutif, et
l'unité côté transmission est configurée pour retransmettre le premier paquet après avoir reçu le premier signal de rétroaction et le deuxième signal de rétroaction si le premier paquet est accusé de réception négativement.

6. Système selon la revendication 5, dans lequel l'unité côté transmission et l'unité côté réception utilisent une pluralité de processus HARQ et
l'unité côté transmission est en outre configurée pour transmettre le paquet dans le cadre d'un processus parmi la pluralité de processus HARQ et pour fournir un délai entre l'époque contenant l'autre signal de rétroaction et l'époque suivante à laquelle un autre paquet du processus HARQ est transmis.

7. Appareil côté réception (150) pour recevoir un flux de paquets (210, 211, 212, 213) et envoyer des signaux de rétroaction,
configuré pour recevoir un premier paquet provenant d'un appareil côté transmission envoyé à une première époque de transmission (200) ;
et configuré pour recevoir un deuxième paquet provenant d'un appareil côté transmission envoyé à une deuxième époque de transmission (200) différente de la première époque de transmission ;
et configuré pour envoyer un premier signal de rétroaction (220) à une première époque d'accusé de réception correspondant à la première époque de transmission
et configuré pour envoyer un deuxième signal de rétroaction (220) à une deuxième époque d'accusé de réception différente de la première époque d'accusé de réception, la deuxième époque d'accusé de réception correspondant à la deuxième époque de transmission
et comprenant un codeur ACK/NACK configuré pour coder un premier message d'accusé de réception contenant des informations sur le premier paquet,
le codeur ACK/NACK étant en outre configuré pour coder un deuxième message d'accusé de réception contenant des informations sur le deuxième paquet
où le premier signal de rétroaction contient au moins un bit codé en canal dont la valeur dépend du premier message d'accusé de réception
**caractérisé en ce que** le deuxième signal de rétroaction contient au moins un bit codé en canal dont la valeur dépend conjointement d'au moins le premier message d'accusé de réception et le deuxième message d'accusé de réception en utilisant un code convolutif.

8. Appareil côté réception selon la revendication 7, dans lequel le premier signal de rétroaction et le deuxième signal de rétroaction sont envoyés avant l'époque de transmission à laquelle le paquet est retransmis en cas d'accusé de réception négatif.

9. Appareil côté transmission (100) pour transmettre un flux de paquets et recevoir des signaux de rétroaction (220, 221)
et configuré pour envoyer un premier paquet pendant une première époque de transmission
et configuré pour envoyer un deuxième paquet pendant une deuxième époque de transmission différente de la première époque de transmission ;
et configuré pour recevoir un premier signal de rétroaction envoyé à une première époque d'accusé de réception qui correspond à la première époque de transmission ;
et configuré pour recevoir un deuxième signal de rétroaction envoyé à une deuxième époque d'accusé de réception différente de la première époque d'accusé de réception, la deuxième époque d'accusé de réception correspond à la deuxième époque de transmission ;
et comprenant un décodeur ACK/NACK qui détermine un premier message d'accusé de réception qui contient des informations sur le premier paquet et détermine un deuxième message d'accusé de réception qui contient des informations sur le deuxième paquet
dans lequel le premier signal de rétroaction contient au moins un bit codé en canal dont la valeur dépend du premier message d'accusé de réception, **caractérisé en ce que**
le deuxième signal de rétroaction contient au moins un bit codé en canal dont la valeur dépend conjointement d'au moins le premier message d'accusé de réception et le deuxième message d'accusé de réception en utilisant un code convolutif
et le décodeur ACK/NACK détermine le premier message d'accusé de réception en décodant conjointement le premier signal de rétroaction et le deuxième signal de rétroaction
et l'appareil côté transmission prend la décision d'effectuer une nouvelle transmission ou d'effectuer une retransmission après ledit décodage conjoint.
